(19) Europäisches Patentamt
European Patent Office
Office européen des brevets

(11) **EP 3 404 502 B1**

(12) **EUROPEAN PATENT SPECIFICATION**

(45) Date of publication and mention
of the grant of the patent:
**03.03.2021 Bulletin 2021/09**

(51) Int Cl.:
***G05B 23/02*** *(2006.01)*

(21) Application number: **17171581.6**

(22) Date of filing: **17.05.2017**

(54) **CONDITION-BASED MAINTENANCE OF DEVICE**

ZUSTANDSBASIERTE INSTANDHALTUNG EINER VORRICHTUNG

MAINTENANCE BASÉE SUR L'ÉTAT DU DISPOSITIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**21.11.2018 Bulletin 2018/47**

(73) Proprietor: **Caverion Oyj
01650 Vantaa (FI)**

(72) Inventor: **HÄRKÖNEN, Tuomo
01650 Vantaa (FI)**

(74) Representative: **Berggren Oy, Tampere
Visiokatu 1
33720 Tampere (FI)**

(56) References cited:
EP-A1- 2 418 620   US-A1- 2009 306 830
US-A1- 2015 206 104   US-A1- 2017 114 927
US-B2- 8 275 507

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD

The present invention is related to condition-based maintenance of a device for estimating a change of the maintenance need of the device.

BACKGROUND

Condition-based maintenance (CBM), shortly described, is maintenance when need arises. This maintenance is performed after one or more indicators show that equipment is going to fail or that equipment performance is deteriorating.

Sensors may be used to monitoring equipment. However, the amount of data generated by the sensors is vast and therefore its use of the purposes of CBM is difficult. The amount of data becomes even higher when one sensor per equipment is not enough for characterizing the equipment for the purposes of CBM and more sensors are installed to monitor the equipment.

US8275507B2 discloses monitoring a thrust reverser of a turbojet having an actuator controlled by an electric motor. A maintenance notice from a weighted combination of provisional notices is determined. Each provisional notice relates to a category of parameters associated with at least one phase of an operating cycle of the reverser. The category is selected from a category of parameters representative of a duration of said phase, of an energy seen by the motor during said phase, of a torque seen by the motor at a predefined instant of said phase, and of a duration during which the setpoint speed of rotation and the measured speed of rotation of the motor differ during said phase. Each provisional notice is generated by analyzing values obtained during at least one cycle for at least one parameter of said category relative to a degradation threshold. A monitoring device examines whether a degradation threshold S1(P) associated with the parameter P has been crossed.

EP2418620 A1 discloses a system for monitoring operation of a plurality of devices is provided. The system includes a sub-system configured to monitor the plurality of devices. The sub-system includes a memory for storing a computational model, and one or more processors are programmed to receive, from each of the plurality of devices, a signal representative of a parameter indicative of a current condition of a respective device, compare each of the parameters to a computational model, determine, for each of a plurality of time periods, a probability each of the plurality of devices may fail based on the comparing, and schedule maintenance if a quantity of the plurality of devices likely to fail in one of the plurality of time periods exceeds a quantity threshold level.

US2015/206104 A1 discloses a maintenance management device including an error status diagnosis unit, a grace period estimation unit, a maintenance cost estimation unit, and a screen display unit. When the error status diagnosis unit has diagnosed the occurrence of an anomaly, the grace period estimation unit estimates a first grace period leading up to the occurrence of a failure. Data from a sensor reaching a threshold value is used to determine whether an anomaly has occurred.

SUMMARY OF THE INVENTION

The invention is defined by the features of the independent claims. Some specific embodiments are defined in the dependent claims.

According to a first aspect of the present invention, there is provided a method 2. P according to claim 1.

According to a second aspect of the present invention, there is provided an arrangement according to claim 8.

The invention provides that changes in the use of the device over time may be used to adapt the estimated time instant of the change of the maintenance need and maintenance operations may be scheduled more accurately prior to the change of the maintenance need. Further advantages will become apparent from the detailed description.

BRIEF DESCRIPTION OF THE DRAWINGS

FIGURE 1 illustrates an arrangement for condition-based maintenance of a device in accordance with at least some embodiments of the present invention;

FIGURE 2 illustrates a method in accordance with at least some embodiments of the present invention;

FIGURE 3 illustrates an example of generating maintenance need information in accordance with at least some embodiments of the present invention;

FIGURE 4 illustrates a method for adapting operational parameters of the device for supporting condition-based maintenance;

FIGURE 5 illustrates a relationship between threshold levels and operational parameters of the device in accordance with at least some embodiments of the present invention;

FIGURE 6 illustrates a user interface displaying threshold levels and measurements obtained from a sensor installed for monitoring a device in accordance with at least some embodiments of the present invention;

FIGURE 7 illustrates a user interface displaying estimated time instants and alarm information in accordance with at least some embodiments of the present invention;

FIGURE 8 illustrates generating a relationship between threshold levels and operational parameters of the device in accordance of at least some embodiments of the present invention; and

FIGURE 9 illustrates measurements obtained from a device operated by sets of operational parameters.

EMBODIMENTS

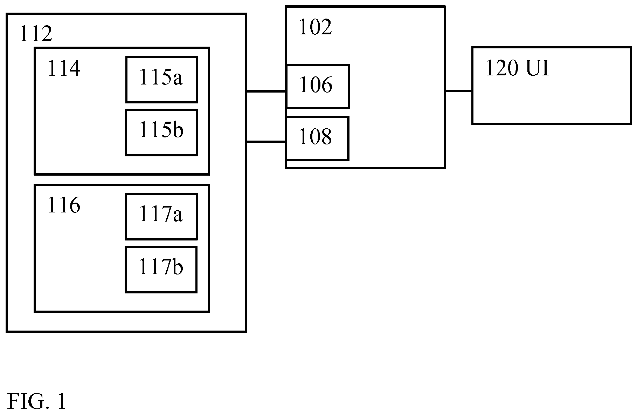

FIGURE 1 illustrates an arrangement for condition-based maintenance of at least one device in accordance with at least some embodiments of the present invention. The arrangement comprises a network interface 106 capable of communications with one or more sensors 115a, 115b, 117a, 117b or processing units connected to the sensors. The sensors may be installed to devices for monitoring the devices 114, 116. The arrangement may further comprise a network interface 108 capable of communications with the devices or processing unit connected to the devices 114, 116. It should be appreciated that the network interfaces may be implemented in a single unit or device, or in separate units or devices. The arrangement comprises a controller 102 operatively connected to the network interfaces 106, 108 to cause predictive condition-based maintenance of the devices, wherein the condition-based maintenance of the devices is performed on the basis of measurements obtained from the sensors and information indicating operational parameters of the devices. Connections between the controller and the network interfaces may for example computer data buses.
Examples of the device comprise devices for mechanical material processing. The mechanical material processing may comprise processing wood or excavated material, for example. Such devices comprise chipper-shredders and crushers.
The device may have one or more parts that are moving by an alternating and/or a rotational movement, when the device is operated. Examples of the moving parts may comprise gears and shafts. Accordingly, the parts may be actively moved, when the device is operated. It should be appreciated that the device may further comprise one or more parts that are passively moved. Examples of the parts that may be passively moved comprise bearings. In active moving of the parts, operating power of the device is operatively connected to the parts for causing their active movement. An operative connection may be achieved by power transmission means capable of communicating power from a power source to the parts of the device. In passive moving of the parts, operating power of the device is not, at least directly, operatively connected to the passively moved parts. Accordingly, the operating power is not connected by power transmission means of the device to the passively moving parts. The power transmission means may comprise gears, shafts and electrical buses. The device may obtain the operating power from an external power source or an internal power source. The device may have an input connection for receiving power from an external power source to the device and/or the device may have an internal power source. The power generated by the power source may be communicated to the parts by the power transmission means. The power generated by the power source may comprise electricity, kinetic power or hydraulic power. Examples of the power sources comprise a hydraulic accumulator, an electrical generator, mains electric connection, a combustion engine, a diesel generator.
In an embodiment, one or more sensors 115a, 115b, 1176a, 117b installed for monitoring a device 112, 116 may comprise a displacement sensor, an acceleration sensor and/or a velocity sensor, and the device is capable of mechanical material processing, wherein the device comprises one or more parts that are actively movable by operating power of the device, when the device is operated, whereby the sensors are installed to the device for monitoring movement of the actively movable parts, during operation of the device. The measurements may be utilized in adaptively estimating maintenance need of the device. Since the sensors are installed for monitoring movement of the actively movable parts, condition of the actively movable parts may be particularly well monitored for the purposes of estimating maintenance need of the device. The sensors may be installed within a neighborhood, e.g. within a short distance, of the actively movable parts. Specifics of the installation may depend on the construction of the device and type of the sensor used.

In an example, a device 114, 116 and one or more sensors 115a, 115b, 117a, 117b installed to the device for monitoring the device may be deployed in an industrial automation system 112. The industrial automation system may be arranged to provide communications of data, operational parameters, measurements and commands over one or more connections outside the industrial automation system and over one or more connections inside the industrial automation system. In this way communications between the device 114, 116 and the sensors 115a, 115b, 117a, 117b inside the industrial automation system may be provided with network equipment outside the industrial automation system. The network equipment outside the industrial automation system may comprise the network interfaces 106, 108 of the controller.

In an example, devices 114, 116 and/or the sensors 115a, 115b, 117a, 117b may comprise, or be operatively connected to, internal or external communications modules that provide communications of data, measurements and commands with the network.

Examples of connections inside the industrial automation system comprise various field buses and private networks using private address, e.g. Internet protocol address, space.

Examples of connections outside the industrial automation system comprise public networks, for example the internet, telecommunications networks capable connecting terminals over wired and/or wireless connections, and IEEE 802.11 standards based wireless local area network.

Examples of the sensors comprise a displacement sensor, a velocity sensor and an acceleration sensor. The sensors are capable of performing measurements. A measurement may comprise values in measurement units of a specific quantity measure by the sensor. Accordingly, in an example a velocity sensor may produce measurement values in m/s, and an acceleration sensor may produce measurement values in m/(s^2). The sensors may be applied in determining vibrations in the device. In an example, 1st derivative of the measurement values of the displacement sensor may be used to obtain vibration speed and 2nd derivative of the measurement values of the displacement sensor may be used to obtain vibration acceleration.

The information indicating operational parameters may comprise operational parameters, a temperature and rotational speed. It should be appreciated that one or more operational parameters may serve for indicating one or more other operational parameters. In an example a changes in rotational speed of a chipper-shredder may indicate variance in diameter of the timber processed by the chipper-shredder. The operational parameter may indicate load of the device. In one example the load of the device may be determined in voltages or by power. The temperature may comprise a temperature outside the device and/or a temperature inside the device. The rotational speed may be a speed of a rotating axis of the device, for example.

In an embodiment, the arrangement may comprise a user interface (UI) component 120 capable of causing to display information comprising one or more user selectable elements, threshold levels for measurement values, measurement values, indicators, estimated time instants, alarm information and operational parameters of the device. Examples of the user interface component comprise a display device and display controller. The display device may a user interface component located close to the user for displaying the user information for condition-based maintenance of the device. The display device may be included in or connected to a computer, a smart phone or tablet computer. The display controller may be a user interface components located remote from the user for delivering information for condition-based maintenance to the user, for example to a display device of the user or to a computer connected to the display device. The display controller located remote from the user may be provided by one or more networked computing resources, for example computers or virtual machines. The display controller located remote from the user may be implemented as part of a cloud computing system, whereby information regarding estimating a change of the maintenance need of the device may be provided as a cloud computing service. In this way the information may be accessed provided that there is a network connection to the cloud service.

Connections outside the industrial automation system described above may be also utilized for connections between the controller and the user interface component.

In an embodiment, the arrangement may comprise a pre-analyzer unit and a post-analyzer unit, wherein the pre-analyzer unit capable of performing dedicated analytics specific to the device and/or operating environment of the device and the post-analyzer unit is capable of performing generic analytics. The generic analytics is less dependent on the device and/or operating environment of the device. The pre-analyzer unit may apply dedicated analytics to measurements from sensors installed for monitoring the device and operational parameters from the device. The dedicated analytics may have relatively high resolution. For example, the measurements and operational parameters may be processed in a time scale of milliseconds. The dedicated analytics results in aggregated measurements and aggregated operational parameters, whereby the amount of information is reduced. In this way the high resolution applied by the pre-analyzer may be reduced to for example to the level of hours, days or weeks. The pre-analyzer is preferably local to the device such that the amount of measurements and the operational parameters may be reduced close to the device and communications of raw measurements and raw operational parameters over long distances may be avoided, the aggregated measurements and aggregated operational parameters may be sent to the post-analyzer. The pre-analyzer and post-analyzer units may be capable of implementing the controller 102 such that functionalities of the controller may be distributed between them. The post-analyze unit may be implemented by a cloud computing system, for example. Reducing the resolution by the pre-analyzer provides that data transmission resources between the pre-analyzer and the post-analyzer may be kept and acceptable levels and controlling processing resources needed at the post-analyzer.

In an embodiment the dedicated analytics comprises generating aggregated data. Aggregating data, i.e. operational parameters and/or measurements, may comprise extracting a specific part of high resolution data. The extracted specific part may comprise peak values and/or Root Mean Square (RMS) of the data. In one example, peak value may be extracted from a 1st, 2nd, 3rd or 4th derivatives of measurement values. RMS may be extracted at least from the 1st, 2nd derivatives of the measurement values. The operational parameters and measurements may be high resolution data, for example in a time scale of milliseconds, whereby the aggregation may be performed over a time period, for example hours, minutes or days, that is longer than the time scale of the high resolution input data to the aggregation. The aggregating may be performed by a controller or a pre-analyzer, in connection with obtaining the measurements and operational parameters in phases 202 and 204. The derivatives of measurement values may be generated by the sensors or by the controller or pre-analyzer.

In an example, aggregation may be performed on measurement values obtained from a displacement sensor. Measurement values of the displacement sensor may be aggregated by determining peak values of 1st, 2nd, 3rd and/or 4th derivatives of the measurement values. A 1st derivative of the measurement value of the displacement sensor is a vibration speed and the 2nd derivative is a vibration acceleration. Peak values of the vibration speed and/or the vibration acceleration may be further aggregated by determining RMS of the peak values.

An arrangement or a part of the arrangement, for example a controller 102, may comprise a processor and memory storing computer program code that when executed may cause one or more functionalities described in an embodiment described herein.

In an embodiment, the arrangement is a cloud computing system comprising a user interface component 120 capable of causing displaying information comprising at least one of user-selectable element, a threshold level for measurement values, a measurement value, an indicator, an estimated time instant, alarm information and operational parameters.

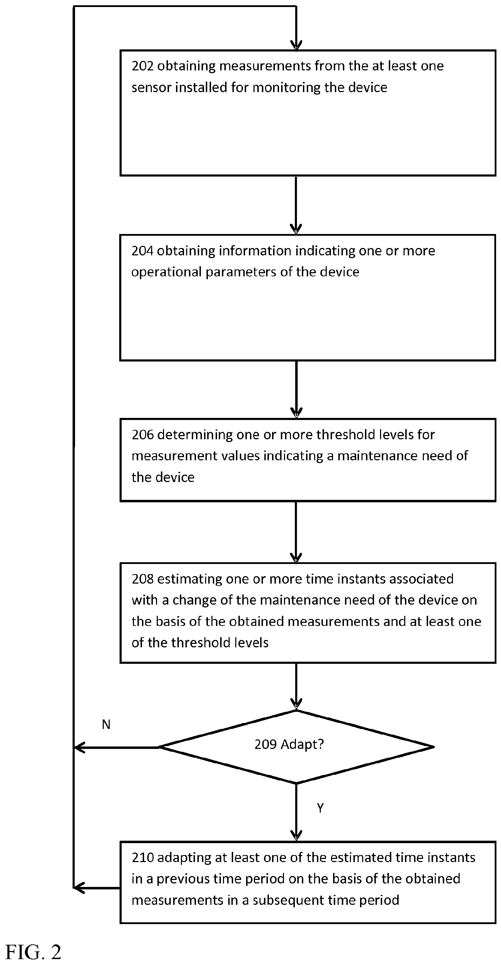

FIGURE 2 illustrates a method in accordance with at least some embodiments of the present invention. The method may be performed by the arrangement of FIGURE 1, for example the controller 102. The method provides adaptively estimating maintenance need of the device.

Phase 202 comprises obtaining measurements from at least one sensor installed for monitoring the device, by a network interface capable of communications with the at least one sensor or processing unit connected to the at least sensor;

Phase 204 comprises obtaining, by a network interface capable of communications with the device or processing unit connected to the device, information indicating one or more operational parameters of the device;

Phase 206 comprises determining, by a controller, one or more threshold levels for measurement values indicating a maintenance need of the device;

Phase 208 comprises estimating, by the controller, one or more time instants associated with a change of the maintenance need of the device on the basis of the obtained measurements and at least one of the threshold levels.

In phase 209, it may be determined whether the generated estimate should be adapted or further measurements should be obtained in phase 202. The method may continue to phase 210 if new measurements are available for adapting a previously generated estimate of the time instant. The new measurements may have been obtained in a time period following the time period, where the previously generated estimate was generated. The method may continue to phase 202 for obtaining further measurements by the sensor in a time period subsequent to the time period, where the previously generated estimate was generated.

Phase 210 comprises adapting at least one of the estimated time instants in a previous time period on the basis of the obtained measurements in a subsequent time period. In this way changes in the use of the device over time may be used to adapt the estimated time instant of the change of the maintenance need and maintenance operations may be scheduled more accurately prior to the change of the maintenance need.

It should be appreciated that the method may continue after phase 210 to phase 202, whereby the condition-based maintenance of the device may be continued.

In an embodiment, phase 206 comprises determining one or more threshold level by a linear model based on computational models of two, three or more operational parameters of the device. In this way the operational parameters may be transformed by the models for determining the threshold levels and on the other hand the threshold level is not dependent on a single operational parameter of the device. The linear model may be used to determine more than one threshold level by offset terms specific to each threshold level.

The basis of the linear model may be defined as

$$s(\boldsymbol{x}) := f1(x1) + f2(x2) + \cdots + fm(xm), \quad (1),$$

where $\boldsymbol{x}T=[x1,x2,...,xm]$ is the vector of operational parameters of the device and the functions $fi$ are partially defined computational models, e.g. first-order linear models, specific to individual operational parameters. Using equation (1), n threshold levels may be generated:

$$\mathrm{AlarmLimits} := \{\mathrm{alarmLimit} = \beta i + s(\boldsymbol{x}) \mid \beta i \in \boldsymbol{\beta} \text{ and } \boldsymbol{x} \in \mathbb{R}m\}, \quad (2),$$

where $\beta=\{\beta1,\beta2,...,\beta n\}$ is a set containing a different offset term for each threshold level and alarmLimit is a threshold level and AlarmLimits is a set of n threshold levels.

In an embodiment, phase 208 comprises, prior to estimating the time instants, operating the device to obtain reference values for one or more operational parameters and reference measurements, and applying the threshold levels subject to the measurements meeting at least one criterion. In this way the, threshold levels may be initialized for condition-based maintenance of the device. The device may be operated by user interface of the device locally to the device or via a remote user interface provided for example by an industrial automation system.

In an embodiment, an indicator for the change of the maintenance need may be set, when the estimated time in phase 208 is less than a threshold time and the indicator may be re-set, on the basis of the previous estimated time instant adapted in phase 210. The indicator may be set on a user interface. The user interface may be caused to be displayed on a user interface component 120.

In an embodiment, a maintenance operation may be scheduled, before at least one estimated time instant. The time instant may be estimated in accordance with phase 208 in FIGURE 2. In this way the maintenance operation may be performed prior to the estimated time instant, whereby the change of the maintenance need may be prevented at the estimated time instant. Accordingly, the maintenance operation may be determined on the basis of the maintenance need after the estimated time instant. In one example, the estimated time instant may be May 4th 2017 and the maintenance need after May 4th may be "maintenance of bearings" of the device. Consequently, the maintenance operation may be determined on the basis of the "maintenance of the bearings" to comprise "checking of the bearings and replacing of the bearings". The "checking of the bearings and replacing of the bearings" may be scheduled prior to May 4th to avoid change of the maintenance need of the device at the estimated time instant. Once the maintenance operation has been performed, condition-based maintenance of the device may continue for example in accordance to the phases in FIGURE 2. Maintenance needs of devices may be various, whereby it should be appreciated that a maintenance need and maintenance operation associated with a next estimated time instant in phase 208 may be different than maintenance need and maintenance operation associated with a previous estimated time instant. However, in a very simple device, the estimated time instants may be associated with the same recurring maintenance need and maintenance operation, for example maintenance need of the battery and a maintenance operation to replace the battery.

In an embodiment, a time instant associated with a change of the maintenance need is determined by fitting the obtained measurements in phase 202 to threshold levels over time for finding a time instant associated with a change of the maintenance need, at which the measurements are estimated to meet one or more of the threshold levels. In one example the fitting may be based on regression analysis. The fitting may be performed as part of the phase 202 or phase 210. In an example, the threshold levels may comprise a warning, alarm and failure level, whereby the time instant may indicate, when the measurements are estimated to meet the warning level, alarm level and/or failure level.

In an embodiment one or more of operational parameters and measurements from sensor installed for monitoring may be aggregated. The aggregating may comprise extracting a specific part of high resolution data, i.e. operational parameters or measurements. The extracted specific part may comprise peak values and/or Root Mean Square (RMS) of the data. In one example, peak value may be extracted from a 1st, 2nd, 3rd or 4th derivatives of measurement values. RMS may be extracted at least from the 1st, 2nd derivatives of the measurement values. In an example, aggregation may be performed on measurement values obtained from a displacement sensor. Measurement values of the displacement sensor may be aggregated by determining peak values of 1st, 2nd, 3rd and/or 4th derivatives of the measurement values. A 1st derivative of the measurement value of the displacement sensor is a vibration speed and the 2nd derivative is a vibration acceleration. Peak values of the vibration speed and/or the vibration acceleration may be further aggregated by determining RMS of the peak values.

The operational parameters and measurements may be high resolution data, for example in a time scale of milliseconds, whereby the aggregation may be performed over a time period, for example hours, minutes or days, that is longer than the time scale of the high resolution input data to the aggregation. The aggregating may be performed by a controller or a pre-analyzer, in connection with obtaining the measurements and operational parameters in phases 202 and 204. The derivatives of measurement values may be generated by the sensors or by the controller or pre-analyzer.

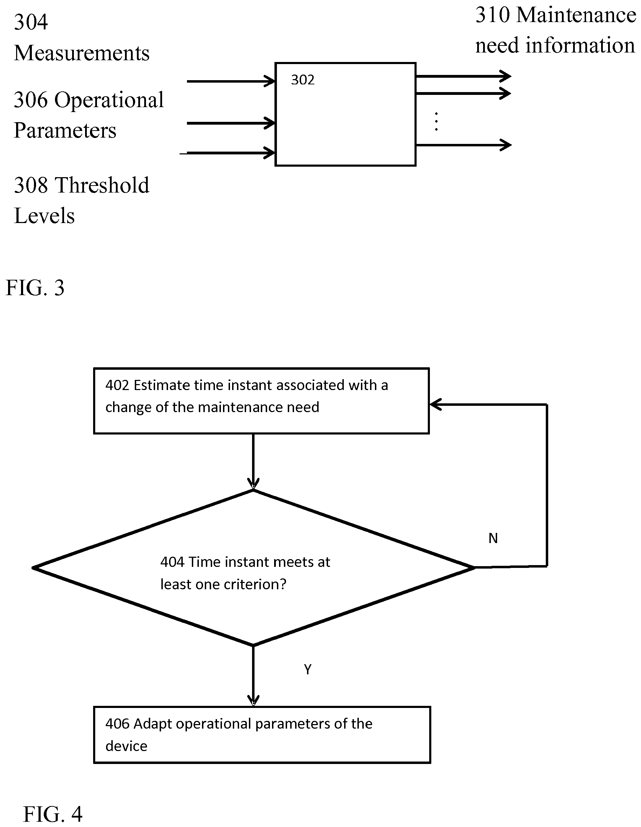

FIGURE 3 illustrates an example of generating maintenance need information in accordance with at least some embodiments of the present invention. The maintenance need information 310 may comprise information indicating one or more of a maintenance need and time instant associated with a change of the maintenance need of the device. The maintenance need information may be generated by an apparatus 302 or arrangement capable of processing input information comprising measurements from sensors 304, operational parameters of the device 306 and threshold levels 308. The input information may be processed by the apparatus, for example in accordance with phases 202, 204 and 206 in FIGURE, such that maintenance need information may be generated by the apparatus. In one example the apparatus 302 may be the controller in the arrangement of FIGURE 1.

The maintenance need information 310 may indicate a maintenance need of the device. The maintenance need information may comprise an alarm information and/or threshold level information. The threshold level information may comprise one or more threshold levels to be utilized in estimating one or more time instants associated with a change of the maintenance need of the device, for example in accordance with phase 208 in FIGURE 2. The alarm information may comprise information specifying alarms and/or alarm indicators. When an alarm is triggered, an alarm indicator may be set to indicate that measurements by a sensor installed for monitoring the device have met a threshold level.

FIGURE 4 illustrates a method for adapting operational parameters of the device for supporting condition-based maintenance. The method may be performed in connection with at least part of the method of FIGURE 2.

Phase 402 comprises estimating one or more time instants associated with a change of the maintenance need of the device. The estimating may be performed in accordance with phase 208 described in FIGURE 2.

Phase 404 comprises determining whether at least one estimated time instant in phase 402 meets at least one criterion. The criterion may comprise a generic criterion applicable to a plurality of devices and/or operating environments, or the criterion may be a dedicated criterion to a specific device and/or operating environment. In one example the criterion may comprise a time period. The time period may be a fixed value, for example a time period of two weeks, whereby the time period may serve as a generic criterion. On the other hand the time period may be dependent on maintenance need information, whereby the time period may be used as a dedicated criterion. In one example, a time period serving as dedicated criterion may be defined for a time instant associated with a change of the maintenance need of the device. The device may have a current maintenance need, for example indicated or defined by a current alarm or alarm status and the estimated time instant may indicate a new maintenance need indicated or defined by an estimated alarm or alarm status after the estimated time instant. The time period to be used as criterion may be dependent on the type of the current alarm or alarm status and/or the type of the estimated alarm or alarm status..

It should be appreciated that a time period used as a generic or dedicated criterion may be determined adaptively. Alternatively or additionally, one or more time periods may be used as a generic or dedicated criterion. A time period to be used as criterion may be determined adaptively on the basis of the estimated time instant associated with the change of the maintenance need of the device. In one example, the estimated time instant associated with a change of the maintenance need may be adapted on the basis of the estimated time instant associated with the change of the maintenance need of the device occurring in a restricted time period, outside of the restricted time period of the device and/or the time period to be used as criterion may be adapted on the basis of the operating environment of the device. The time period used as criterion may be longer if the estimated time instant associated with a change of the maintenance need occurs inside a restricted time period than if the time instant occurs outside the restricted time period. Examples of the restricted time periods comprise: a time period, where maintenance of the device may be difficult; a time period, where scheduling of maintenance is not possible. In one example, a time period, where maintenance of the device may be difficult may be a weekend. In one example, a time period, where scheduling of maintenance is not possible may be a time period, where the device is not available for maintenance. In one example, the operating environment of the device may be a location, where the device may be unavailable for maintenance. In one example, the location of the device may be on a ship at sea. Accordingly, also location of the device may be caused to adapt the time period to be used as criterion.

When the time instant is determined to meet the at least one criterion, the method may proceed to phase 406 that comprises adapting the operational parameters of the device. In one example one or more of the operational parameters may be decreased or increased. In this way the operation of the device may be adapted, whereby the estimated time instant associated with the change of the maintenance need may be caused to be delayed to a suitable time, for example to an unrestricted time period.

When the time instant is not determined to meet the at least one criterion, the method may proceed to phase 402 to perform further estimates of time instants associated with a change of the maintenance need of the device.

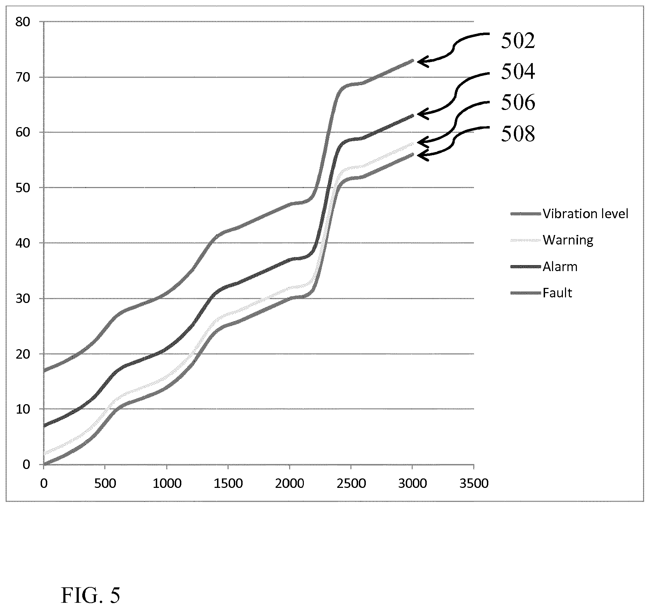

FIGURE 5 illustrates a relationship between threshold levels and operational parameters of the device in accordance of at least some embodiments of the present invention. The threshold levels 502, 504, 506 may be adapted on the basis of the operational parameters of the device and the relationship. The adaptation may follow the relationship illustrated in FIGURE 5. The adaptation may be performed for example line phase 206 in FIGURE 2. Adapting the threshold levels provides that monitoring of the device may be adapted according to the operational parameters.

Adapting the threshold levels may be performed as part of the method in FIGURE 2. In accordance with phase 208 in FIGURE 2, the estimated time instant may be a time instant, when the measurement values 508 are estimated to exceed any of the threshold levels 502, 504, 506. After adapting the operational parameters of the device, for example in accordance with phase 406 in FIGURE 4, the threshold levels may be adapted, for example according to the relationship between the operational parameters and the threshold levels illustrated in FIGURE 5. The threshold levels may be applied in phase 208 for estimating a time instant using the adapted threshold levels.

The threshold levels 502, 504, 506 may comprise threshold levels for measurement values from sensors installed for monitoring the device. A threshold level may indicate a maintenance need of the device, when measurement values meet the threshold level. In FIGURE 5, the thresholds and measurement values are illustrated as a function of one operational parameter of the device. However, it should be appreciated that the threshold levels and measurement values may be determined as a function of more than one operational parameters of the device. In an example, the threshold levels may be determined on the basis of a linear model utilizing a plurality of operational parameters described in formula (1).

It should be appreciated that operational parameters of the device may be changed either by the user, by wear of the device, or by changes caused by the environment of the device and the change of the operational parameters may cause adaptation of the threshold levels, for example according to the relationship illustrated in FIGURE 5. After the threshold levels are changed, a new estimate for the time instant may be made, in accordance with phase 208 in FIGURE 2.

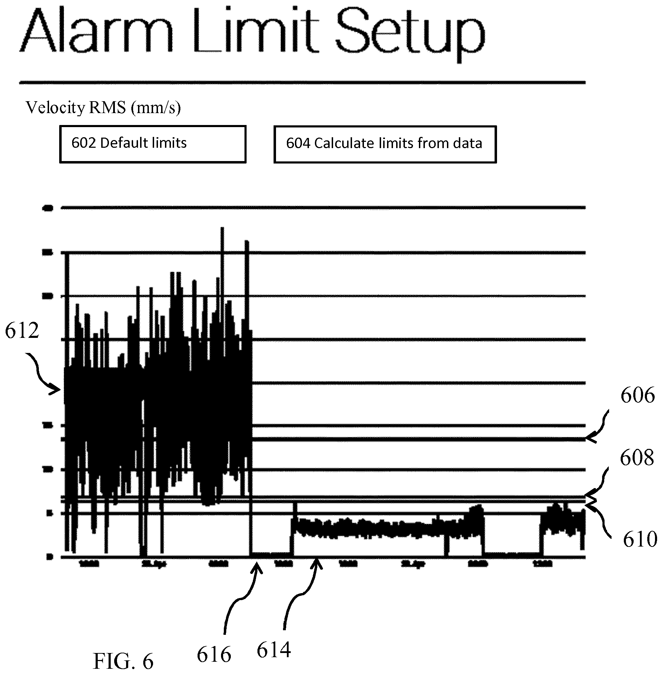

FIGURE 6 illustrates a user interface displaying threshold levels and measurements obtained from a sensor installed for monitoring a device in accordance with at least some embodiments of the present invention. The user interface may be caused to be displayed on a user interface component 120. The measurements may be displayed on a time axis increasing from left to right in the user interface. The measurements 612, 614 may include one or more intervals that may be separated by time periods 616, where measurement values indicate a zero value or noise. The time intervals may indicate time periods during which the device has been operated and the sensor has generated measurement values. The time periods between the measurements may be caused by the device not being driven, whereby the sensor has not generated measurement values or the measurement values are very small, e.g. noise. The threshold levels may comprise one or more levels, for example a failure 606, alarm 608 and warning 610. The user interface may comprise one or more user selectable elements 602, 604 capable of causing to set the threshold levels. The threshold levels may comprise default threshold levels or the threshold levels may be set on the basis of the measurements. In an example the threshold levels may be set on the basis of measurements during a specific time period of the measurements or on the basis of measurements in a detected measurement interval 612, 614. The specific time period may be a user-define time period or a default time period. The detection of the measurement interval may be performed on the basis of monitoring absolute values of the measurements, for example.

In an example illustrated by the measurements on the user interface of FIGURE 6, the first measurements 612 may indicate the user that the device is operated at exceptional load or power, whereby the user can defer from setting threshold levels on the basis of the measurements using the corresponding user-selectable element 604. The measurement interval 614 following the first measurements may indicate the user that the device is operated at an acceptable load or power, whereby the user may set the threshold levels by selecting a user interface element 602 corresponding to the default threshold levels, or selecting the user interface element 604 causing to set the threshold levels on the basis of the measurements. In one example, the threshold levels may be determined on the basis of a linear model defined in formula (2).

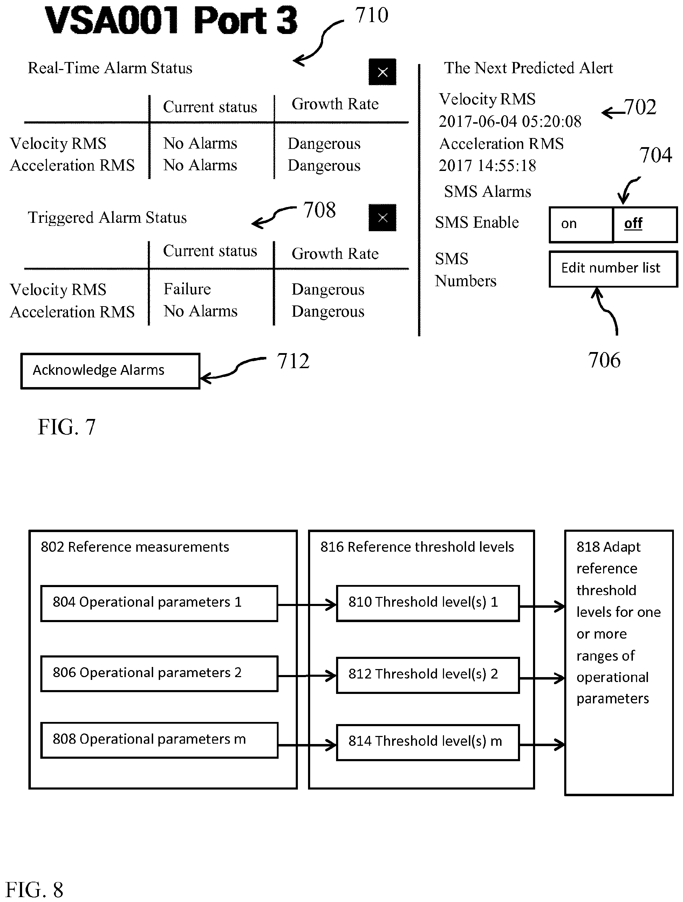

FIGURE 7 illustrates a user interface displaying estimated time instants and alarm information in accordance with at least some embodiments of the present invention. The user interface may be caused to be displayed on a user interface component 120. The alarm information 708, 710 may comprise triggered alarm information 708, real-time alarm information 710 and/or a user-selectable element 712 capable of causing acknowledgement of alarms. The estimated time instants 702 may comprise one or more estimated time instants associated with a change of the maintenance need of the device. The user interface may further comprise a user selectable element 704 capable of causing sending the alarm information to recipients in Short Message Service (SMS) messages. The sending of the SMSs may be enabled and/or disabled by the user selecting the user-selectable element 704. The user interface may further comprise a user selectable element 706 allowing the user to edit a list of recipients for the alarm information sent in SMSs. Selecting the element 706 may cause the user being displayed the list of the recipients and phone numbers of the recipients. The list may be editable by the user for deleting and/or adding recipients and phone numbers of the recipients. It should be appreciated that the list may comprise information necessary for delivering SMS to recipients and therefore, at least one of the name and phone number of the recipient may be omitted depending on implementation. Moreover, depending on implementation also other information may serve the purpose of delivering SMS to recipients.

In an example, the user interface may comprise an indicator for the change of the maintenance need. The indicator may be set, when the estimated time in phase 208 is less than a threshold time and the indicator may be re-set, on the basis of the previous estimated time instant adapted in phase 210. Setting the indicator may comprise updating an estimated time instant 702 displayed in the user interface, when a new estimated time instant is generated and the generated time instant is less than a threshold time from current time. The indicator may be set to have a specific color. The color may be adapted based on how close in time the estimated time instant is. Additionally, thresholds may be defined to determine when each color should be used for the indicator. When the previous estimated time instant is adapted 210, the displayed estimated time instant may be updated, e.g. re-set. In this connection, the color of the displayed estimated time instant may be set anew.

FIGURE 8 illustrates generating a relationship between threshold levels and operational parameters of the device in accordance of at least some embodiments of the present invention. Preferably, the relationship is generated at least prior to estimating the time instants in phase 208 in FIGURE 2. The relationship may be a threshold level determined in phase 206 in FIGURE 2. The generated relationship may be, for example as described in FIGURE 5. One or more sensors may be installed to a device for monitoring the device in accordance with FIGURE 1. In this way measurements may be obtained from the sensors, for example in accordance with phase 202 of FIGURE 2. Also information indicating the operational parameters may be obtained for example in accordance with phase 204 of FIGURE 2. Generating the relationship may comprise phase 802 of operating the device by one, two, three, or more sets, 1, 2, ...m, of operational parameters 804, 806, 808. In this way measurements may be obtained using each set of operational parameters. The measurements may be referred to as reference measurements. The reference measurements may be used to determine one or more threshold levels, reference threshold levels, based on the measurements performed during operating the device using corresponding sets of operational parameters. In this way, the determined threshold levels may have a relationship with specific operational parameters used during the reference measurement. In one example the measurements may be displayed on a user interface and one or more threshold levels may be set on the basis of the measurements via a user interface for example as described in connection with FIGURE 6.

Phase 816 may comprise adapting the determined reference threshold levels 810, 812, 814 to values of operational parameters which are outside the operational parameters used in the reference measurements. In this way the number of reference measurements may be kept reasonable even if a number of operational parameters and thereby also possible combinations of values of the operational parameters would be high. Values of operational parameters outside the operational parameters used in the reference measurements may comprise one or more ranges of operational parameter values between operational parameter values used in the reference measurements. In an example, the adapting may comprise applying the computational model $fi$ to the operational parameters. Once the threshold levels are adapted, the relationship between the threshold levels and the operational parameters has been generated for the operational parameters used in the reference measurements and also for the operational parameters that were not used in the reference measurements, i.e. the operational parameters that were not used in the reference measurements. During operation of the device, the generated relationship between the threshold levels and operational parameters of the device may be utilized for determining one or more threshold levels for measurement values indicating a maintenance need of the device, for example in phase 206. In this way changes in the operational parameters of the device may adapt the threshold levels for estimating one or more time instants associated with a change of the maintenance need of the device, for example in phase 208.

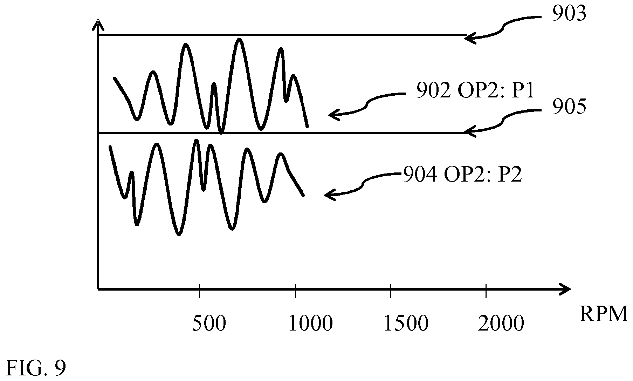

FIGURE 9 illustrates measurements 902, 904 obtained from a device operated by sets of operational parameters. One or more sensors may be installed to a device for monitoring the device in accordance with FIGURE 1. In this way measurements may be obtained from the sensors, for example in accordance with phase 202 of FIGURE 2. The measurements may be reference measurements. In an example the sets of the operational parameters may comprise two, three or more sets of operational parameters. A set of operational parameters may comprise one or more operational parameters. Examples of the operational parameter comprise a power (P) of the device and a rotational speed, for example rotations per minute (RPM), of the device. A value of one of the operational parameters in one of the sets may be different than a value of the operational parameter in another one of the sets. In one example, one set of the operational parameters may comprise P having value PI and RPM having value 500. Another set of the operational parameters may comprise P having value P2 and RPM having value 500. The device may be operated using the set of operational parameters, where P is PI and RPM is 500 and the device may be operated using another set of operational parameters, where P is P2 and RPM is 500. It should be appreciated that the RPM may be a range, for example an RPM between 100 to 1000. Similarly, also P may be a range, for example from 10kW to 20kW. Measurements 902, 904 obtained by operating the device using different operational parameters may be used to determine threshold levels 903, 905, for example the reference threshold levels 810, 812, 814 in FIGURE 8. The measurements may be displayed on a user interface and one or more threshold levels may be set on the basis of the measurements via a user interface for example as described in connection with FIGURE 6.

It is to be understood that the embodiments of the invention disclosed are not limited to the particular structures, process steps, or materials disclosed herein, but are extended to equivalents thereof as would be recognized by those ordinarily skilled in the relevant arts.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the following description, numerous specific details are provided, such as examples of lengths, widths, shapes, etc., to provide a thorough understanding of embodiments of the invention.

In an embodiment there is provided an arrangement for condition-based maintenance of a device, comprising: means for a) obtaining 202 measurements from at least one sensor installed for monitoring the device, by a network interface capable of communications with the at least one sensor or processing unit connected to the at least sensor; means for b) obtaining 204, by a network interface capable of communications with the device or processing unit connected to the device, information indicating one or more operational parameters of the device; means for c) determining 206, by a controller operatively connected to the network interfaces, one or more threshold levels for measurement values indicating a maintenance need of the device; means for - d) estimating 208, by the controller, one or more time instants associated with a change of the maintenance need of the device on the basis of the obtained measurements and at least one of the threshold levels; and means for repeating a), b) c) and d) over one or more time periods such that at least one of the previous estimated time instants is adapted 210 on the basis of the obtained measurements in a subsequent time period.

It should be appreciated that various embodiments described herein may be implemented by means that are caused to perform one or more functions described in the embodiments. Suitable means may comprise means known to the skilled person, for example a computer, a processor, a memory device, a computer program and/or a virtual machine that may be combined in various ways to cause one or more functions described in the embodiments. For example, a computer program may be stored on a memory device accessible to computer, a processor and/or a virtual machine for execution of the code.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", i.e. a singular form, throughout this document does not exclude a plurality.

REFERENCE SIGNS LIST

| | |
|---|---|
| 102 | Controller in FIGURE 1 |
| 106, 108 | Network interface in FIGURE 1 |
| 112 | Industrial automation system in FIGURE 1 |
| 114, 116 | Devices in FIGURE 1 |
| 115a, 115b | |
| 117a, 117b | Sensors installed for monitoring devices in FIGURE 1 |
| 120 | User interface component in FIGURE 1 |
| 202 to 210 | Phases of the method of FIGURE 2 |
| 302 | Apparatus in FIGURE 3 |
| 304 | Measurements in FIGURE 3 |

| 306 | Operational parameters in FIGURE 3 |
| 308 | Threshold levels in FIGURE 3 |
| 310 | Maintenance need information in FIGURE 3 |
| 402 to 406 | Phases of the method of FIGURE 4 |
| 502, 504, 506 | Threshold levels in FIGURE 5 |
| 508 | Measurement values in FIGURE 5 |
| 602 to 614 | Items of the user interface in FIGURE 6 |
| 702 to 712 | Items of the user interface in FIGURE 7 |
| 802, 816, 818 | Phases in FIGURE 8 |
| 804 to 806 | Sets of operational parameters in FIGURE 8 |
| 810-814 | Reference threshold levels |
| 902, 904 | Measurements in FIGURE 9 |
| 903, 905 | Threshold levels in FIGURE 9 |

**Claims**

1. A method for condition-based maintenance of a device of an industrial automation system, **characterized in that** the method comprises:

   - a) obtaining (202) measurements comprising measurement values from at least one sensor installed for monitoring the device inside the industrial automation system, by a first network interface outside of the industrial automation system and capable of communications with the at least one sensor or a processing unit connected to the at least sensor;
   - b) obtaining (204), by a second network interface outside of the industrial automation system and capable of communications with the device inside of the industrial automation system or a processing unit connected to the device, information indicating two or more operational parameters of the device;
   - c) determining (206), by a controller operatively connected to the first and second network interfaces, on the basis of a linear model based on computational models of the two or more operational parameters of the device, one or more threshold levels for the measurement values indicating a maintenance need of the device, wherein at least one of the threshold levels is adapted on the basis of the linear model and the operational parameters of the device, wherein the linear model defines the threshold levels as a function of the operational parameters;
   - d) estimating (208), by the controller, one or more time instants associated with a change of the maintenance need of the device on the basis of the obtained measurements and at least one of the threshold levels; repeating a), b) c) and d) over one or more time periods, and adapting (210) at least one of the previous estimated time instants on the basis of the obtained measurements in a subsequent time period; and the method further comprises:
   - scheduling at least one maintenance operation before said at least one adapted estimated time instant.

2. A method according to claim 1, wherein at least one of operational parameters and measurements from sensor installed for monitoring are aggregated.

3. A method according to claim 1 or 2, wherein prior to estimating (208) the time instants, the method comprises: operating the device using one or more sets of operational parameters to obtain (802) reference measurements corresponding to the sets, and said one or more threshold levels are determined (816) on the basis of the reference measurements; and adapting (818) the determined reference threshold levels (810, 812, 814) to values of operational parameters which are outside the operational parameters used in the reference measurements.

4. A method according to claim 1, 2 or 3, comprising: adapting (406) the operational parameters of the device, when at least one estimated time instant is determined (404) to meet at least one criterion.

5. A method according to claim 4, wherein the criterion comprises a time period adapted on the basis of the estimated time instant associated with the change of the maintenance need of the device occurring in a restricted time period, outside of the restricted time period of the device and/or the criterion comprises a time period adapted on the basis of operating environment of the device.

6. A method according to any of claims 1 to 5, wherein the time instant associated with a change of the maintenance need is determined by fitting, based on regression analysis, the obtained measurements to threshold levels over time for finding a time instant, at which the measurements are estimated to meet one or more of the threshold levels.

7. A method according to any of claims 1 to 6, comprising setting an indicator (702) for the change of the maintenance need, when the estimated time is less than a threshold value and re-setting the indicator, on the basis of the adapted (210) previous estimated time instant.

8. An arrangement for condition-based maintenance of a device of an industrial automation system, **characterized in that** the arrangement comprises a first network interface outside of the industrial automation system and capable of communications with at least one sensor or a processing unit connected to the at least sensor, wherein the at least one sensor is installed for monitoring the device inside of the industrial automation system, and a second network interface outside of an industrial automation system and capable of communications with the device inside of the industrial automation system or a processing unit connected to the device, and a controller operatively connected to the first and second network interfaces to cause:

   - a) obtaining (202), by the first network interface, measurements comprising measurement values from at least one sensor installed for monitoring the device;
   - b) obtaining (204), by the second network interface, information indicating two or more operational parameters of the device;
   - c) determining (206), by the controller, on the basis of a linear model based on computational models of the two or more operational parameters of the device, one or more threshold levels for the measurement values indicating a maintenance need of the device, wherein at least one of the threshold levels is adapted on the basis of the linear model and the operational parameters of the device, wherein the linear model defines the threshold levels as a function of the operational parameters;
   - d) estimating (208), by the controller, one or more time instants associated with a change of the maintenance need of the device on the basis of the obtained measurements and at least one of the threshold levels; repeating a), b) c) and d) over one or more time periods, and adapting (210) at least one of the previous estimated time instants on the basis of the obtained measurements in a subsequent time period; and
   - scheduling at least one maintenance operation before said at least one adapted estimated time instant.

9. An arrangement according to claim 8, comprising a pre-analyzer unit and a post-analyzer unit, wherein the pre-analyzer unit capable of performing dedicated analytics specific to the device and/or operating environment of the device and the pre-analyzer unit is connected over a network to the post-analyzer unit implemented by a cloud computing system, wherein the post-analyzer unit is capable of performing generic analytics.

10. An arrangement according to claim 8 or 9, wherein the arrangement is a cloud computing system comprising a user interface component capable of causing displaying information comprising at least one of user-selectable element, a threshold level for the measurement values, a measurement value, an indicator, at least one of the estimated time instants, alarm information and the operational parameters.

11. An arrangement according to any of claims 8 to 10, comprising means for performing a method according to any of claims 2 to 7.

12. An arrangement according to any of claims 8 to 11, wherein the at least one sensor is a displacement sensor, an acceleration sensor or velocity sensor, and the device is capable of mechanical material processing, wherein the device comprises one or more parts that are actively movable by operating power of the device, when the device is operated, whereby the at least sensor is installed to the device for monitoring movement of the actively movable parts, during operation of the device.

**Patentansprüche**

1. Verfahren zur zustandsbasierten Wartung einer Vorrichtung eines industriellen Automatisierungssystems, **dadurch gekennzeichnet, dass** das Verfahren Folgendes umfasst:

   - a) Erhalten (202) von Messungen, die Messwerte von mindestens einem Sensor umfassen, der zur Überwachung der Vorrichtung innerhalb des industriellen Automatisierungssystems installiert ist, über eine erste Netzwerkschnittstelle, die außerhalb des industriellen Automatisierungssystems und zur Kommunikation mit mindestens einem Sensor oder einer mit dem mindestens Sensor verbundenen Verarbeitungseinheit fähig ist;

- b) Erhalten (204) von Informationen, die zwei oder mehr Betriebsparameter der Vorrichtung angeben, durch eine zweite Netzwerkschnittstelle, die außerhalb eines industriellen Automatisierungssystems und und zur Kommunikation mit der Vorrichtung innerhalb des industriellen Automatisierungssystems oder einer mit der Vorrichtung verbundenen Verarbeitungseinheit fähig ist;

- c) Bestimmen (206) durch eine Steuerung, die betriebsmäßig mit der ersten und der zweiten Netzwerkschnittstelle verbunden ist, auf der Basis eines linearen Modells basierend auf Rechenmodellen der zwei oder mehr Betriebsparameter der Vorrichtung, eines oder mehrerer Schwellenwerte für die Messwerte, die einen Wartungsbedarf der Vorrichtung anzeigen, wobei mindestens einer der Schwellenwerte auf der Basis des linearen Modells und der Betriebsparameter der Vorrichtung angepasst wird, wobei das lineare Modell die Schwellenwerte als Funktion der Betriebsparameter definiert;

- d) Schätzen (208) eines oder mehrerer Zeitpunkte durch die Steuerung, die mit einer Änderung des Wartungsbedarfs der Vorrichtung verbunden sind, auf der Grundlage der erhaltenen Messungen und mindestens eines der Schwellenwerte; Wiederholen von a), b) c) und d) über einen oder mehrere Zeiträume, und Anpassen (210) mindestens eines der vorher geschätzten Zeitpunkte auf der Grundlage der erhaltenen Messungen in einem nachfolgenden Zeitraum;

und das Verfahren ferner Folgendes umfasst:

- Planen mindestens eines Wartungsvorgangs vor dem mindestens einen angepassten geschätzten Zeitpunkt.

2. Verfahren nach Anspruch 1, wobei mindestens einer der Betriebsparameter und Messungen von einem zur Überwachung installierten Sensor aggregiert werden.

3. Verfahren nach Anspruch 1 oder 2, wobei vor dem Schätzen (208) der Zeitpunkte das Verfahren Folgendes umfasst: Betreiben der Vorrichtung unter Verwendung eines oder mehrerer Sätze von Betriebsparametern, um Referenzmessungen zu erhalten (802), die den Sätzen entsprechen, und die einen oder mehreren Schwellenwerte auf der Basis der Referenzmessungen bestimmt werden (816); und Anpassen (818) der bestimmten Referenzschwellenwerte (810, 812, 814) an Werte von Betriebsparametern, die außerhalb der in den Referenzmessungen verwendeten Betriebsparameter liegen.

4. Verfahren nach Anspruch 1, 2 oder 3, umfassend: Anpassen (406) der Betriebsparameter der Vorrichtung, wenn mindestens ein geschätzter Zeitpunkt (404) bestimmt wird, um mindestens ein Kriterium zu erfüllen.

5. Verfahren nach Anspruch 4, wobei das Kriterium einen Zeitraum, der auf der Grundlage des geschätzten Zeitzeitpunkts angepasst ist, der mit der Änderung des Wartungsbedarfs der Vorrichtung verbunden ist, die in einem begrenzten Zeitraum auftritt, außerhalb des begrenzten Zeitraums der Vorrichtung umfasst, und/oder das Kriterium einen Zeitraum umfasst, der auf der Basis der Betriebsumgebung der Vorrichtung angepasst wird.

6. Verfahren nach einem der Ansprüche 1 bis 5, wobei der Zeitpunkt, der mit einer Änderung des Wartungsbedarfs verbunden ist, durch Anpassen der erhaltenen Messungen an Schwellenwerte über die Zeit basierend auf einer Regressionsanalyse zum Finden eines Zeitpunkts bestimmt wird, zu dem geschätzt wird, dass die Messungen einen oder mehrere der Schwellenwerte erfüllen.

7. Verfahren nach einem der Ansprüche 1 bis 6, umfassend das Setzen eines Indikators (702) für die Änderung des Wartungsbedarfs, wenn die geschätzte Zeit kleiner als ein Schwellenwert ist, und Zurücksetzen des Indikators auf der Basis des angepassten (210) vorherigen geschätzten Zeitpunkts.

8. Anordnung zur zustandsbasierten Wartung einer Vorrichtung eines industriellen Automatisierungssystems, **dadurch gekennzeichnet, dass** die Anordnung Folgendes umfasst: eine erste Netzwerkschnittstelle, die außerhalb des industriellen Automatisierungssystems und zur Kommunikation mit mindestens einem Sensor oder einer mit dem mindestens Sensor verbundenen Verarbeitungseinheit fähig ist, wobei der mindestens eine Sensor zum Überwachen der Vorrichtung innerhalb des industriellen Automatisierungssystems installiert ist, und eine zweite Netzwerkschnittstelle, die außerhalb eines industriellen Automatisierungssystems und und zur Kommunikation mit der Vorrichtung innerhalb des industriellen Automatisierungssystems oder einer mit der Vorrichtung verbundenen Verarbeitungseinheit fähig ist, und eine Steuerung, die betriebsmäßig mit der ersten und zweiten Netzwerkschnittstelle verbunden ist, um Folgendes zu veranlassen:

- a) Erhalten (202) von Messungen, die Messwerte von mindestens einem zur Überwachung der Vorrichtung installierten Sensor umfassen, durch die erste Netzwerkschnittstelle;

- b) Erhalten (204) von Informationen, die zwei oder mehr Betriebsparameter der Vorrichtung angeben, durch die zweite Netzwerkschnittstelle;

- c) Bestimmen (206) eines oder mehrerer Schwellenwerte für die Messwerte, die einen Wartungsbedarf der Vorrichtung anzeigen, durch die Steuerung auf der Basis eines linearen Modells basierend auf Rechenmodellen der zwei oder mehr Betriebsparameter der Vorrichtung, wobei mindestens einer der Schwellenwerte auf der Basis des linearen Modells und der Betriebsparameter der Vorrichtung angepasst wird, wobei das lineare Modell die Schwellenwerte als Funktion der Betriebsparameter definiert;

- d) Schätzen (208) eines oder mehrerer Zeitpunkte durch die Steuerung, die mit einer Änderung des Wartungsbedarfs der Vorrichtung verbunden sind, auf der Grundlage der erhaltenen Messungen und mindestens eines der Schwellenwerte; Wiederholen von a), b) c) und d) über einen oder mehrere Zeiträume, und Anpassen (210) mindestens eines der vorher geschätzten Zeitpunkte auf der Grundlage der erhaltenen Messungen in einem nachfolgenden Zeitraum; und

- Planen mindestens eines Wartungsvorgangs vor dem mindestens einen angepassten geschätzten Zeitpunkt.

**9.** Anordnung nach Anspruch 8, umfassend eine Voranalysatoreinheit und eine Nachanalysatoreinheit, wobei die Voranalysatoreinheit in der Lage ist, dedizierte Analysen durchzuführen, die für die Vorrichtung und/oder die Betriebsumgebung der Vorrichtung spezifisch sind, und die Voranalysatoreinheit über ein Netzwerk mit der Nachanalysatoreinheit verbunden ist, die von einem Cloud-Computing-System implementiert wird, wobei die Nachanalysatoreinheit in der Lage ist, generische Analysen durchzuführen.

**10.** Anordnung nach Anspruch 8 oder 9, wobei die Anordnung ein Cloud-Computing-System ist, das eine Benutzerschnittstellenkomponente umfasst, die eine Anzeige von Informationen verursachen kann, umfassend mindestens eines von einem Benutzer auswählbaren Element, einem Schwellenwert für die Messwerte, einem Messwert, einem Indikator, mindestens einer der geschätzten Zeitpunkte, Alarminformationen und der Betriebsparameter.

**11.** Anordnung nach einem der Ansprüche 8 bis 10, umfassend Mittel zum Durchführen eines Verfahrens nach einem der Ansprüche 2 bis 7.

**12.** Anordnung nach einem der Ansprüche 8 bis 11, wobei der mindestens eine Sensor ein Verschiebungssensor, ein Beschleunigungssensor oder ein Geschwindigkeitssensor ist, und die Vorrichtung zur mechanischen Materialbearbeitung fähig ist, wobei die Vorrichtung einen oder mehrere Teile umfasst, die durch die Betriebsleistung der Vorrichtung aktiv beweglich sind, wenn die Vorrichtung betrieben wird, wobei der mindestens Sensor an der Vorrichtung installiert ist, um die Bewegung der aktiv beweglichen Teile während des Betriebs der Vorrichtung zu überwachen.

**Revendications**

**1.** Procédé pour la maintenance basée sur l'état d'un dispositif d'un système d'automatisation industrielle, **caractérisé en ce que** le procédé comprend :

a) l'obtention (202) de mesures comprenant des valeurs de mesure d'au moins un capteur installé pour surveiller le dispositif à l'intérieur du système d'automatisation industrielle, par une première interface réseau en dehors du système d'automatisation industrielle et capable de communiquer avec l'au moins un capteur ou une unité de traitement connectée à l'au moins un capteur ;

b) l'obtention (204), par une seconde interface réseau en dehors du système d'automatisation industrielle et capable de communiquer avec le dispositif à l'intérieur du système d'automatisation industrielle ou une unité de traitement connectée au dispositif, d'informations indiquant deux paramètres de fonctionnement du dispositif ou plus ;

c) la détermination (206), par un dispositif de commande connecté de manière opérationnelle aux première et seconde interfaces réseau, sur la base d'un modèle linéaire basé sur des modèles de calcul des deux paramètres de fonctionnement du dispositif ou plus, d'un ou de plusieurs niveaux de seuil pour les valeurs de mesure indiquant un besoin de maintenance du dispositif, dans lequel au moins l'un des niveaux de seuil est adapté sur la base du modèle linéaire et des paramètres de fonctionnement du dispositif, dans lequel le modèle linéaire définit les niveaux de seuil en fonction des paramètres de fonctionnement ;

d) l'estimation (208), par le dispositif de commande, d'un ou de plusieurs instants de temps associés à un changement du besoin de maintenance du dispositif sur la base des mesures obtenues et d'au moins l'un des niveaux de seuil ; la répétition de a), b) c) et d) au cours d'une ou de plusieurs périodes de temps et l'adaptation (210) d'au moins l'un des instants de temps estimés précédents sur la base des mesures obtenues dans une période de temps ultérieure ; et le procédé comprend en outre :

- la programmation d'au moins une opération de maintenance avant ledit au moins un instant de temps estimé adapté.

2. Procédé selon la revendication 1, dans lequel au moins les uns des paramètres de fonctionnement et des mesures du capteur installé pour la surveillance sont agrégés.

3. Procédé selon la revendication 1 ou 2, dans lequel avant l'estimation (208) des instants de temps, le procédé comprend : le fonctionnement du dispositif à l'aide d'un ou de plusieurs ensembles de paramètres de fonctionnement pour obtenir (802) des mesures de référence correspondant aux ensembles, et lesdits un ou plusieurs niveaux de seuil sont déterminés (816) sur la base des mesures de référence ; et l'adaptation (818) des niveaux de seuil de référence déterminés (810, 812, 814) à des valeurs de paramètres de fonctionnement qui sont en dehors des paramètres de fonctionnement utilisés dans les mesures de référence.

4. Procédé selon la revendication 1, 2 ou 3, comprenant : l'adaptation (406) des paramètres de fonctionnement du dispositif, lorsqu'au moins un instant de temps estimé est déterminé (404) pour satisfaire au moins un critère.

5. Procédé selon la revendication 4, dans lequel le critère comprend une période de temps adaptée sur la base de l'instant de temps estimé associé au changement du besoin de maintenance du dispositif survenant dans une période de temps restreinte, en dehors de la période de temps restreinte du dispositif et/ou le critère comprend une période de temps adaptée sur la base de l'environnement de fonctionnement du dispositif.

6. Procédé selon l'une quelconque des revendications 1 à 5, dans lequel l'instant de temps associé à un changement du besoin de maintenance est déterminé en ajustant, sur la base d'une analyse de régression, les mesures obtenues à des niveaux de seuil au cours du temps pour trouver un instant de temps, auquel les mesures sont estimées pour satisfaire un ou plusieurs des niveaux de seuil.

7. Procédé selon l'une quelconque des revendications 1 à 6, comprenant le réglage d'un indicateur (702) pour le changement du besoin de maintenance, lorsque le temps estimé est inférieur à une valeur de seuil et le réglage à nouveau de l'indicateur, sur la base de l'instant de temps estimé précédent adapté (210).

8. Agencement pour la maintenance basée sur l'état d'un dispositif d'un système d'automatisation industrielle, **caractérisé en ce que** l'agencement comprend une première interface réseau en dehors du système d'automatisation industrielle et capable de communiquer avec au moins un capteur ou une unité de traitement connectée à l'au moins capteur, dans lequel l'au moins un capteur est installé pour surveiller le dispositif à l'intérieur du système d'automatisation industrielle, et une seconde interface réseau en dehors d'un système d'automatisation industrielle et capable de communiquer avec le dispositif à l'intérieur du système d'automatisation industrielle ou une unité de traitement connectée au dispositif, et un dispositif de commande connecté de manière opérationnelle aux première et seconde interfaces réseau pour entraîner :

a) l'obtention (202), par la première interface réseau, de mesures comprenant des valeurs de mesure d'au moins un capteur installé pour surveiller le dispositif ;
b) l'obtention (204), par la seconde interface réseau, d'informations indiquant deux paramètres de fonctionnement du dispositif ou plus ;
c) la détermination (206), par le dispositif de commande, sur la base d'un modèle linéaire basé sur des modèles de calcul des deux paramètres de fonctionnement du dispositif ou plus, d'un ou de plusieurs niveaux de seuil pour les valeurs de mesure indiquant un besoin de maintenance du dispositif, dans lequel au moins l'un des niveaux de seuil est adapté sur la base du modèle linéaire et des paramètres de fonctionnement du dispositif, dans lequel le modèle linéaire définit les niveaux de seuil en fonction des paramètres de fonctionnement ;
d) l'estimation (208), par le dispositif de commande, d'un ou de plusieurs instants de temps associés à un changement du besoin de maintenance du dispositif sur la base des mesures obtenues et d'au moins l'un des niveaux de seuil ; la répétition de a), b) c) et d) au cours d'une ou de plusieurs périodes de temps, et l'adaptation (210) d'au moins l'un des instants de temps estimés précédents sur la base des mesures obtenues dans une période de temps ultérieure ; et

- la programmation d'au moins une opération de maintenance avant ledit au moins un instant de temps estimé adapté.

**9.** Agencement selon la revendication 8, comprenant une unité de pré-analyseur et une unité de post-analyseur, dans lequel l'unité de pré-analyseur est capable d'effectuer des analyses dédiées spécifiques au dispositif et/ou à l'environnement de fonctionnement du dispositif et l'unité de pré-analyseur est connectée sur un réseau à l'unité de post-analyseur mise en œuvre par un système d'informatique en nuage, dans lequel l'unité de post-analyseur est capable d'effectuer des analyses génériques.

**10.** Agencement selon la revendication 8 ou 9, dans lequel l'agencement est un système d'informatique en nuage comprenant un composant d'interface utilisateur capable d'entraîner l'affichage d'informations comprenant au moins l'un d'un élément sélectionnable par l'utilisateur, d'un niveau de seuil pour les valeurs de mesure, d'une valeur de mesure, d'un indicateur, au moins les uns des instants de temps estimés, des informations d'alarme et des paramètres de fonctionnement.

**11.** Agencement selon l'une quelconque des revendications 8 à 10, comprenant des moyens pour effectuer un procédé selon l'une quelconque des revendications 2 à 7.

**12.** Agencement selon l'une quelconque des revendications 8 à 11, dans lequel l'au moins un capteur est un capteur de déplacement, un capteur d'accélération ou un capteur de vitesse, et le dispositif est capable de traiter un matériau mécanique, dans lequel le dispositif comprend une ou plusieurs pièces qui sont activement mobile par la puissance de fonctionnement du dispositif, lorsque le dispositif fonctionne, moyennant quoi l'au moins un capteur est installé sur le dispositif pour surveiller le mouvement des parties activement mobiles, pendant le fonctionnement du dispositif.

112
114
115a
115b
116
117a
117b

102
106
108

120 UI

FIG. 1

```
┌─────────────────────────────────────────────────┐
│ 202 obtaining measurements from the at least one │
│ sensor installed for monitoring the device       │
│                                                   │
│                                                   │
│                                                   │
└─────────────────────────────────────────────────┘
                        │
                        ▼
┌─────────────────────────────────────────────────┐
│ 204 obtaining information indicating one or more │
│ operational parameters of the device             │
│                                                   │
│                                                   │
└─────────────────────────────────────────────────┘
                        │
                        ▼
┌─────────────────────────────────────────────────┐
│ 206 determining one or more threshold levels for │
│ measurement values indicating a maintenance need  │
│ of the device                                     │
│                                                   │
└─────────────────────────────────────────────────┘
                        │
                        ▼
┌─────────────────────────────────────────────────┐
│ 208 estimating one or more time instants         │
│ associated with a change of the maintenance need │
│ of the device on the basis of the obtained        │
│ measurements and at least one of the threshold    │
│ levels                                            │
└─────────────────────────────────────────────────┘
                        │
                        ▼
               ◇ 209 Adapt? ◇
          N  ◄──          │  Y
                          ▼
┌─────────────────────────────────────────────────┐
│ 210 adapting at least one of the estimated time  │
│ instants in a previous time period on the basis  │
│ of the obtained measurements in a subsequent      │
│ time period                                       │
└─────────────────────────────────────────────────┘
```

FIG. 2

304
Measurements

306 Operational
Parameters

308 Threshold
Levels

302

310 Maintenance
need information

**FIG. 3**

402 Estimate time instant associated with a
change of the maintenance need

404 Time instant meets at
least one criterion?

N

Y

406 Adapt operational parameters of the
device

**FIG. 4**

FIG. 5

# Alarm Limit Setup

Velocity RMS (mm/s)

602 Default limits
604 Calculate limits from data

FIG. 6

# VSA001 Port 3 ⟋ 710

Real-Time Alarm Status    ❌

|  | Current status | Growth Rate |
|---|---|---|
| Velocity RMS | No Alarms | Dangerous |
| Acceleration RMS | No Alarms | Dangerous |

Triggered Alarm Status ⟵ 708    ❌

|  | Current status | Growth Rate |
|---|---|---|
| Velocity RMS | Failure | Dangerous |
| Acceleration RMS | No Alarms | Dangerous |

| Acknowledge Alarms |
ⵦ 712

The Next Predicted Alert

Velocity RMS
2017-06-04 05:20:08 ⟵702
Acceleration RMS
2017 14:55:18                704

SMS Alarms

SMS Enable

| on | **off** |
|---|---|

SMS
Numbers

| Edit number list |

706

## FIG. 7

| 802 Reference measurements | 816 Reference threshold levels | 818 Adapt reference threshold levels for one or more ranges of operational parameters |
|---|---|---|
| 804 Operational parameters 1 | 810 Threshold level(s) 1 | |
| 806 Operational parameters 2 | 812 Threshold level(s) 2 | |
| 808 Operational parameters m | 814 Threshold level(s) m | |

## FIG. 8

FIG. 9

**EP 3 404 502 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8275507 B2
- EP 2418620 A1

- US 2015206104 A1